# EUROPEAN PATENT APPLICATION

(11) **EP 1 605 386 A2**
(43) Date of publication of application: **14.12.2005**
(21) Application number: 04292454.8
(22) Date of filing: 15.10.2004
(51) Int. Cl.: G06K 7/00, G06K 19/07

(54) **Radio communication card**

(30) Priority: 08.06.2004 JP 2004170181
(71) Applicant: FUJITSU LIMITED, Kawasaki-shi, Kanagawa 211-8588 (JP)
(72) Inventor: Kawai, Hiroyuki, c/o Fujitsu Limited, Kawasaki-shi, Kanagawa 211-8588 (JP); Nakakubo, Koji, c/o Fujitsu Limited, Kawasaki-shi, Kanagawa 211-8588 (JP); Nakamichi, Kiyoshi, Fujitsu Peripherals Limited, Kato-gun, Hyogo 673-1447 (JP)
(74) Representative: Joly, Jean-Jacques

(57) **Abstract**

A card model radio-communication terminal device comprises a card interface part (18) which is accommodated in a host device (1) to provide a function as a transmitter/receiver terminal for radio communications. An extension housing part (14) is separated from the card interface part (18) and not accommodated in the host device (1). A card loading part is arranged in the extension housing part (14) to load a card that is capable of being inserted to and removed from the extension housing part (14), into the card loading part. The card loading part is arranged so that a direction of removal of the card accords with a direction of insertion of the card interface part to the host device (1), and a card slot (16) of the extension housing part (14) and a housing side wall of the host device (1) are mutually opposed in proximity when the card interface part is inserted in the host device (1).

## Description

### CROSS-REFERENCE TO RELATED APPLICATIONS

This application is based upon and claims the benefit of priority from Japanese Patent Application No. 2004-170181, filed on June 8, 2004, the entire contents of which are herein incorporated by reference.

### BACKGROUND OF THE INVENTION

### 1. Field of The Invention

The present invention generally relates to a card model radio-communication terminal device which is attached to a host device and functions as a transmitter/receiver terminal for radio communications, and more particularly to an arrangement method and structure of a card loading part in a card model radio-communication terminal device.

### 2. Description of the Related Art

Conventionally, various kinds of PC cards have been developed as PC cards which are in conformity with the PCMCIA (Personal Computer Memory Card International Association) PC card standard and typically used for the expansion of functions of portable information processing equipment, such as notebook PC (personal computer) and PDA (personal digital assistant). Such PC cards include what functions as a hard disk drive, what functions as a SCSI card, and what functions as a transmitter/receiver terminal for radio communications.

In the case of the PC card which functions as a transmitter/receiver terminal for radio communications, the PC card is usually configured so that it includes a housing having the external configuration that is in conformity with the PCMCIA PC card standard, and a card slot to which a thin, plate-like card for saving data specific to the user, such as SIM card (Subscriber Identity Module card), is inserted.

In the housing of the PC card, connection terminals are provided so that they are press fitted to the contact terminals on the bottom of the card inserted from the card slot, and connect electrically the circuit of the printed circuit board in the housing and the internal circuit within the card.

The personal data specific to the user include identification data which identifies the user of the communication terminal, contract telephone number data which indicates the sender address, and credit card number for accounting, and are recorded in the PC card, such as SIM card, used for the card model radio-communication terminal device.

Therefore, in the card model radio-communication terminal device, when the card loading part for loading the card, such as SIM card, is arranged, it is necessary to consider the structure which prevents the SIM card insertion and removal during operation of the card model radio-communication terminal device, in order to protect the data recorded in the SIM card from being damaged due to the removal of the SIM card at the time of the data reading/writing to the SIM card.

An example of the conventional card model radio-communication terminal device is disclosed in Japanese Laid-Open Patent Application No. 06-252991. This device includes a SIM card insertion/removal prevention mechanism at the time of a telephone call in the foldable digital radio telephone. In this SIM card insertion/removal prevention mechanism, the card slot of the SIM card is arranged in the case side wall of the lower housing which is located adjacent to the hinge unit which connects the upper housing and the lower housing rotatably, and the slidable protection cover is arranged in the upper housing.

Moreover, Japanese Laid-Open Patent Application No. 2003-519416 discloses that an electronic module is provided with the PCMCIA connector in the front surface of the electronic module, and the enclosed element which is arranged to be structurally separate from the front support base is provided in the rear surface of the electronic module. The enclosed element is provided as the extension unit which serves to allow radio communication with the outside.

Moreover, Japanese Laid-Open Patent Application No. 2000-214970 discloses that the adapter for the card connection is provided so that the insertion direction of a multimedia card to the adapter is perpendicular to the insertion direction of the adapter itself to the CF card slot, in order to prevent the card removal in the state in which the adapter is inserted in the CF card slot. CompactFlash (CF) is the registered trademark.

An indication mechanism which indicates the presence of the multimedia card inserted is provided in the rear end surface of the adapter for the card connection, so that the presence of the multimedia card inserted can be checked in the state in which the adapter is inserted in the card slot.

Furthermore, Japanese Laid-Open Patent Application No.08-149035 and Japanese Laid-Open Patent Application No. 2002-298092 disclose that, when arranging the card loading part for loading the PC card in the PC-card model radio-communication terminal device, the card loading part is usually arranged in the PC-card interface part which is the accommodation unit in which the card model radio-communication terminal device is accommodated in the host device (for example, a notebook PC).

That is, in the conventional PC-card model radio-communication terminal device, the card loading part is usually arranged at a portion of the device where the installation space is easily secured.

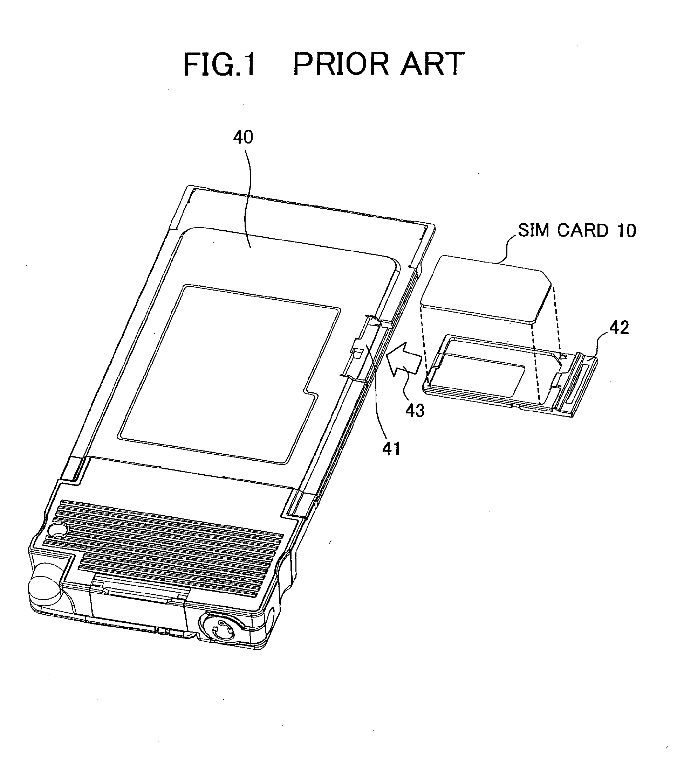

FIG. 1 shows the composition of a conventional PC-card model radio communication terminal.

As shown in FIG. 1, the tray insertion opening 41 is formed in the housing sidewall of this radio communication terminal 40, and the card loading part (not shown) of the radio communication terminal 40 is loaded with the SIM card 10 by inserting the tray 42 carrying the SIM card 10 in the tray insertion opening 41.

In the housing of this PC-card model radio communication terminal 40, the connection terminals are provided so that they are press fitted to the contact terminals on the bottom of the SIM card 10 of the tray 42, inserted from the tray insertion opening 41, and connect electrically the circuit of the printed circuit board in the housing and the circuit in the SIM card 10.

Thus, in the case of the PC-card model radio communication terminal 40 of FIG. 1, the card loading part for accommodating the SIM card is arranged in the PC-card interface part where securing the installation space is comparatively easy.

In the case of the conventional radio communication terminal 40 of FIG. 1, the tray 42 carrying the SIM card 10 is inserted into the tray insertion opening 41 of the housing sidewall in the insertion direction indicated by the arrow 43 in FIG. 1. However, during operation of the card model radio communication terminal 40, the reading and writing of data from and to the SIM card 10 is performed.

If a certain mechanism for preventing the removal of the tray 42 in the tray removal direction that is opposite to the tray insertion direction 43 is not installed as in the conventional radio communication terminal 40 of FIG. 1, the tray 42 may be accidentally removed during operation of the terminal 40. For this reason, there is a risk of damaging the data recorded in the SIM card 10 by the removal of the SIM card 10 of the tray 42.

Therefore, in order to prevent the damage of the data recorded in the SIM card 10 by the SIM card insertion and removal at the time of the data reading/writing to the SIM card 10, there is a need for a certain mechanism which prevents the SIM card insertion and removal during operation of the card model radio communication terminal 40.

On the other hand, in recent years, the card interface part of the card model radio-communication terminal device is in progress of the miniaturization to keep up with the CF card etc., and it is difficult to arrange the card loading part in the card interface part as in the example of FIG. 1.

Accordingly, complicated structure must be adopted in order to arrange the mechanism for the prevention of SIM card insertion/removal during operation in the restricted internal space of the card model radio-communication terminal device.

However, if the SIM card insertion/removal prevention mechanism having complicated structure is formed in the card model radio-communication terminal device, the problems, such as the cost increase due to the complicated parts, the deterioration of the operability and reliability, etc. will arise.

### SUMMARY OF THE INVENTION

An object of the present invention is to provide an improved card model radio-communication terminal device in which the above-mentioned problems are eliminated.

Another object of the present invention is to provide a card model radio-communication terminal device in which a card loading part that can easily prevent the card insertion and removal during operation is arranged in a simple structure with a smaller number of the necessary parts.

The above-mentioned objects of the present invention are achieved by a radio-communication terminal device comprising: a card interface part which is accommodated in a host device to provide a function as a transmitter/receiver terminal for radio communications; an extension housing part which is separated from the card interface part and not accommodated in the host device; and a card loading part which is arranged in the extension housing part to load a card that is capable of being inserted to and removed from the extension housing part, into the card loading part; wherein the card loading part is arranged so that a direction of removal of the card accords with a direction of insertion of the card interface part to the host device, and a card slot of the extension housing part and a housing side wall of the host device are mutually opposed in proximity when the card interface part is inserted in the host device.

In the card model radio-communication terminal device of the present invention, the card loading part is arranged in the extension housing part which is not accommodated in the host device, so that the direction of the card removal accords with the insertion direction to the host device of the card model radio-communication terminal device.

When the host device is equipped with the card model radio-communication terminal device, the card slot of the extension housing part and the housing sidewall of the host device are mutually opposed in proximity, so that the card insertion and removal during operation can be prevented.

According to the card model radio-communication terminal device of the present invention, it is possible to easily prevent the card insertion and removal during operation by using a simple structure with the reduced number of the necessary parts. Moreover, it is possible to overcome the problems, such as the cost increase due to the complicated parts, and the deterioration of the operability and reliability, which may arise when the card loading part is arranged in the card interface part as in the conventional card model radio-communication terminal device.

### BRIEF DESCRIPTION OF THE DRAWINGS

Other objects, features and advantages of the present invention will be apparent from the following detailed description when read in conjunction with the accompanying drawings.
FIG. 1 is a diagram showing the composition of a conventional card model radio communication terminal.
FIG. 2 is a diagram showing the composition of a card model radio communication terminal in an embodiment of the invention.
FIG. 3 is a top view of the upper surface of the card model radio communication terminal of FIG. 2.
FIG. 4 is a side view showing the state in which the card model radio communication terminal of FIG. 2 is inserted in the host device.
FIG. 5 is a front view showing the composition of the front of the card model radio communication terminal of
FIG. 2.

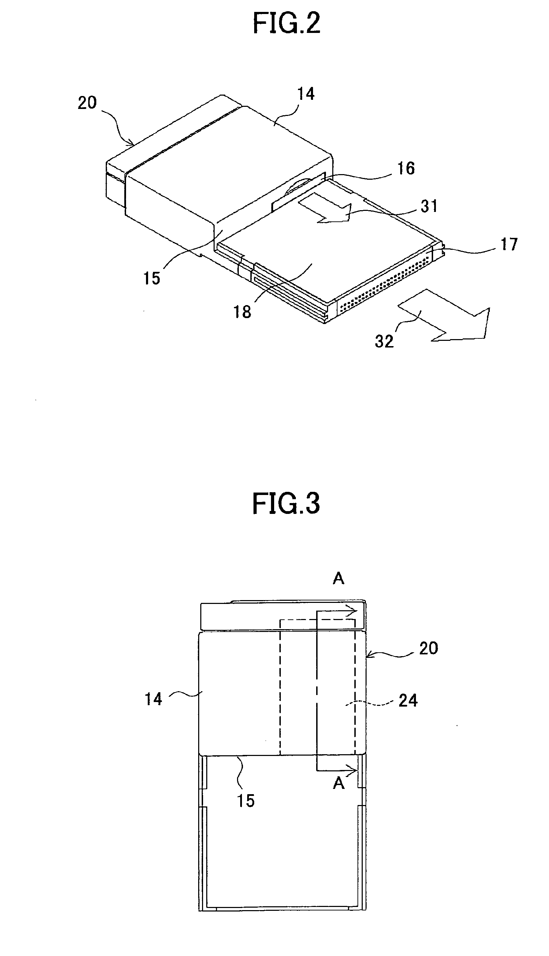

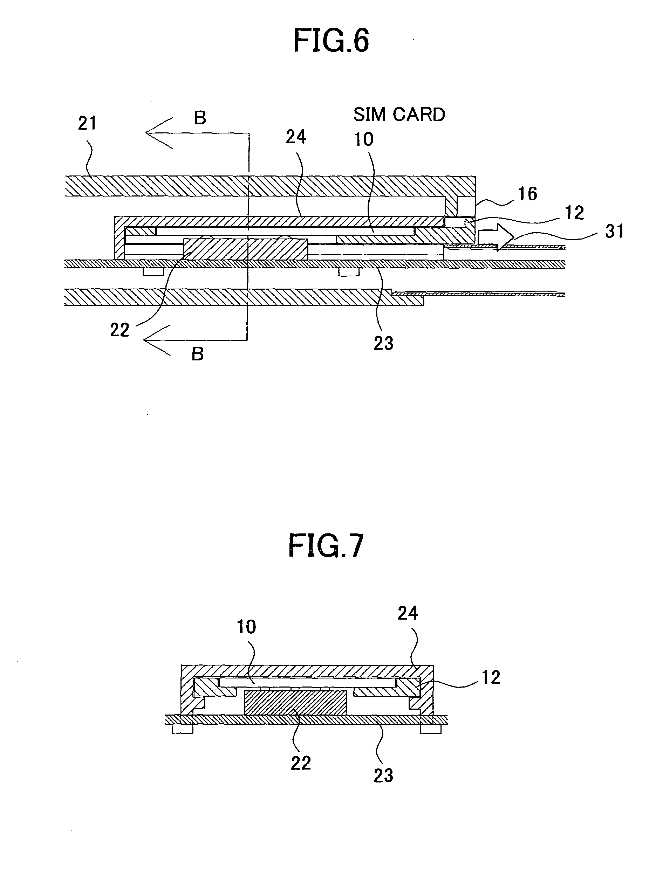

FIG. 6 is a cross-sectional view of the card model radio communication terminal which is taken along the line A-A indicated in FIG. 3.
FIG. 7 is a cross-sectional view of the tray support member of the card model radio communication terminal which is taken along the line B-B indicated in FIG. 6.

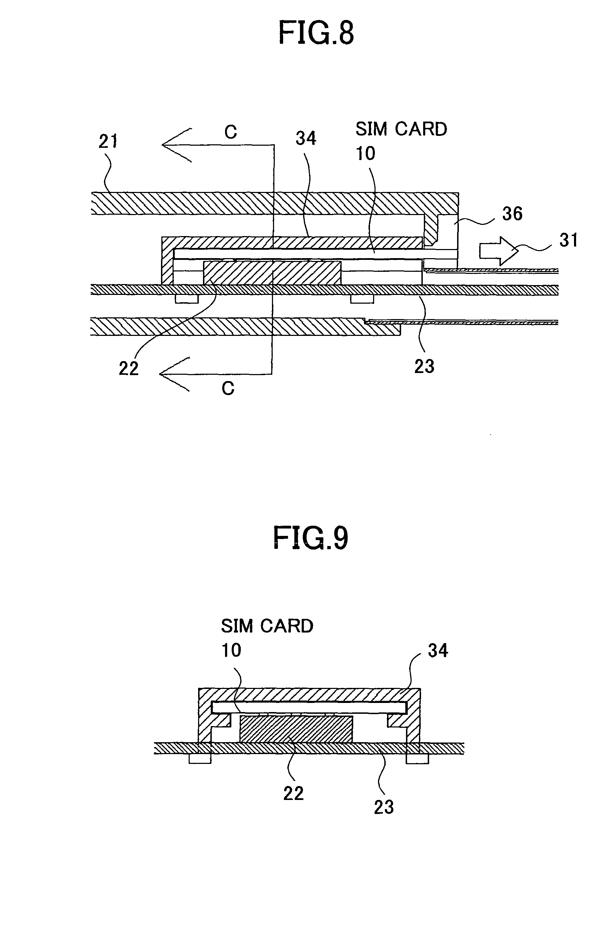

FIG. 8 is a cross-sectional view of a card model radio communication terminal in another embodiment of the invention which is taken along the line A-A indicated in FIG. 3 similar to FIG. 6.
FIG. 9 is a cross-sectional view of the card support member of the card model radio communication terminal which is taken along the line C-C indicated in FIG. 8.

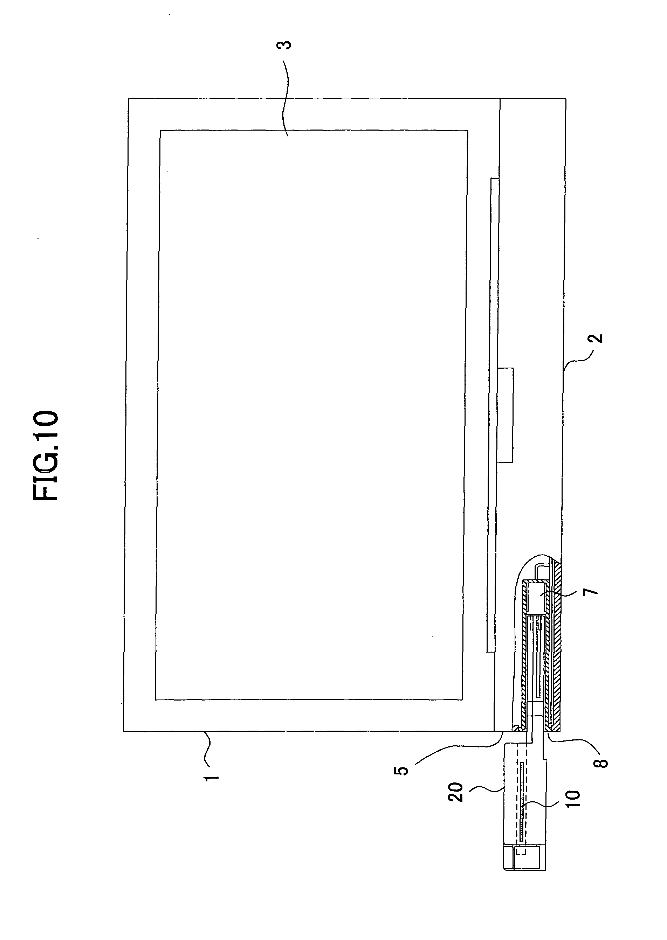

FIG. 10 is a diagram showing the composition of a host device when the card model radio communication terminal of FIG. 2 is inserted therein.

### DETAILED DESCRIPTION OF PREFERRED EMBODIMENTS

A description will now be given of the preferred embodiments of the present invention with reference to the accompanying drawings.

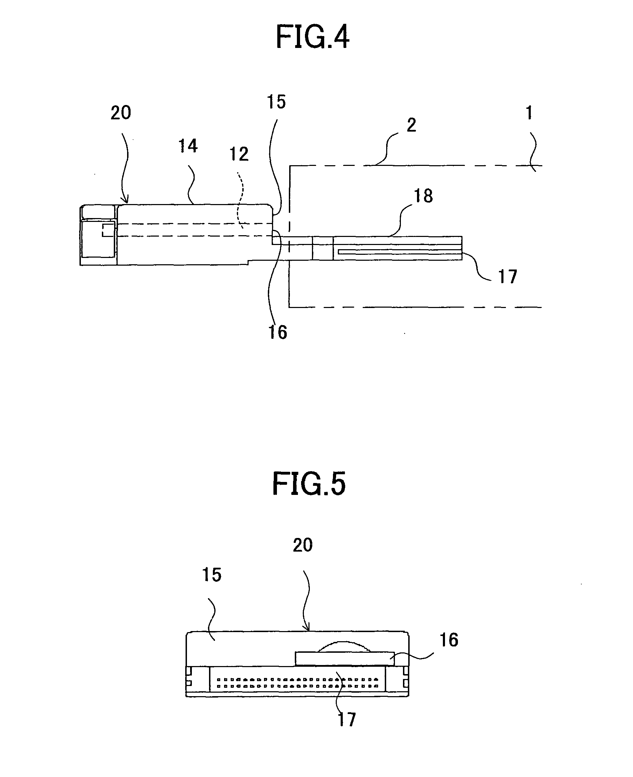

FIG. 2 shows the composition of the card model radio-communication terminal in an embodiment of the present invention. FIG. 3 shows the upper surface of the card model radio communication terminal of FIG. 2. FIG. 4 shows the state in which the card model radio communication terminal of FIG. 2 is inserted in the host device. FIG. 5 shows the composition of the front of the card model radio communication terminal of FIG. 2.

As shown in FIG. 2 through FIG. 5, the card model radio-communication terminal 20 of this embodiment is used in the state in which it is accommodated in the host device (for example, a notebook computer). The card model radio-communication terminal 20 comprises a PC-card interface part 18 which is inserted in the host device to provide the host device with the function as a transmitter/receiver terminal for radio communications, an extension housing part 14 which is separated from the PC-card interface part 18 and not accommodated in the host device (or exposed), and a card loading part 24 which is arranged in the extension housing part 14 for loading the card, such as a SIM card, into the card loading part 24.

The card loading part 24 in this embodiment is arranged in the extension housing part 14 which is not accommodated in the host device or exposed.

The PC-card interface part 18 is provided with a PC-card terminal part 17, and this PC-card terminal part 17 is inserted in the PC card slot (see FIG. 10) provided in the side wall of the housing of the host device. For this reason, it is necessary that the external configuration of the PC-card interface part 18 be in conformity with the PCMCIA PC card standard or the like.

There have been the restrictions as in the conventional card model radio communication terminal of FIG. 1 mentioned above wherein the card loading part is arranged in the PC-card interface part, and complicated structure must be adopted for the card loading part if it is arranged in the PC-card interface part.

The external configuration and internal structure of the extension housing part 14 may be set up freely, unlike the PC-card interface part 18. For this reason, the card loading part 24 in this embodiment is arranged in the extension housing part 14 which is not accommodated in the host device.

As shown in FIG. 4, the sidewall 15 of the extension housing part 14 has a special positional relation with the sidewall of the housing 2 of the host device. Namely, when the card model radio-communication terminal 20 is inserted in the host device 1, the sidewall 15 of the extension housing part 14 and the sidewall of the housing 2 are mutually opposed in close proximity.

As shown in FIG. 5, the SIM card slot 16 is formed in the sidewall 15 of the extension housing part 14. In the card model radio-communication terminal 20 of the present embodiment, the SIM card loading part 24 is arranged in the extension housing part 14 which is not accommodated in the host device, so that the direction of removal of the SIM card 10 (or the direction indicated by the arrow 31 in FIG. 2) accords with the direction of insertion of the card model radio-communication terminal 20 to the host device (or the direction indicated by the arrow 32 in FIG. 2).

When the radio-communication terminal 20 is inserted in the host device, there is the positional relation between the SIM card slot 16 and the housing of the host device such that the user cannot perform insertion and removal operation of the SIM card.

For this reason, in the state in which the radio-communication terminal 20 is inserted in the host device, the insertion and removal of the SIM card during operation of the radio-communication terminal 20 can be easily prevented.

FIG. 10 shows the composition of a host device when the card model radio-communication terminal of FIG. 2 is inserted therein.

With reference to FIG. 10, the case in which the card model radio-communication terminal 20 of FIG. 2 is inserted in a notebook PC which is the host device 1 will be considered.

This notebook PC comprises the housing 2 which accommodates the main part of the computer, and the display 3 in which the display screen is provided.

The PC card slot 8 is arranged in the sidewall 5 of the housing 2 of the notebook PC, and the PC-card terminal which is the card model radio-communication terminal 20 is inserted in the PC card slot 8.

The PC-card interface part 18 of the PC-card terminal 20 provides the notebook PC with the function as a transmitter/receiver terminal for radio communications by the connection of the PC-card terminal part 17 with the connector 7 connected to the main part of the notebook PC.

The card loading part 24 of the PC-card terminal 20 is loaded with the SIM card 10. As shown in FIG. 10, in the state in which the PC-card terminal 20 is inserted in the notebook PC, the SIM card slot 16 and the housing side wall 5 of the notebook PC are mutually opposed in close proximity, so that insertion and removal operation of the SIM card 10 cannot be performed. For this reason, according to the radio-communication terminal 20 of the present embodiment, it is possible to prevent the insertion and removal of the SIM card during operation of the terminal 20 in the state where it is inserted in the notebook PC.

Therefore, according to the card model radio-communication terminal 20 of the present embodiment, it is possible to prevent the card insertion and removal during operation easily with the reduced number of the necessary parts. Moreover, it is possible to overcome the problems, such as the cost increase due to the complicated structure, and the deterioration of the operability and reliability, which arise when the card loading part is arranged in the card interface part as in the conventional device.

The host device to which the structure of the card loading part in the card model radio-communication terminal device of the invention is applicable is not limited to the notebook PC as in the example of FIG. 10. Alternatively, it may include the personal computer, the digital camera, the digital voice recorder, the PDA, and the portable telephone.

Moreover, the cards which can be loaded into the card loading part of the card model radio-communication terminal device of the invention are not limited to the SIM card, and they may include the CF card, and other small memory cards (smart media, memory stick, etc.).

Next, another example of the card loading part in the card model radio-communication terminal device of the invention will be explained.

FIG. 6 is a cross-sectional view of the card model radio-communication terminal 20 which is taken along the line A-A indicated in FIG. 3. FIG. 7 is a cross-sectional view of the card loading part of the card model radio-communication terminal 20 which is taken along the line B-B indicated in FIG. 6.

In the card model radio-communication terminal 20 of this embodiment, the card loading part comprises the tray 12 which is capable of carrying the SIM card 10, the SIM card slot 16, the tray support member 24, and the SIM card socket 22 as shown in FIG. 6 and FIG. 7.

The SIM card slot 16 is formed in the side wall (namely, the side wall 15 of the extension housing part 14) of the terminal housing 21, and it has the positional relation such that the SIM card slot 16 and the housing side wall of the host device are mutually opposed in proximity when the radio-communication terminal 20 is inserted in the host device.

The printed circuit board 23 is connected to the PC-card interface part 18, and the SIM card socket 22 is arranged on this printed circuit board 23.

The tray support member 24 is arranged above the printed circuit board 23, and this tray support member 24 supports the tray 12 so as to be slidable in the direction that is parallel to the insertion direction of the radio-communication terminal 20.

When the tray 12 carrying the SIM card 10 is inserted from the SIM card slot 16 in the card model radio-communication terminal of FIG. 6, the tray 12 is accommodated in the tray support member 24. Hence, by inserting the tray 12 carrying the SIM card 10 in the radio-communication terminal 20, the terminals on the bottom surface of the SIM card 10 are electrically connected with the terminals of the SIM card socket 22 on the printed circuit board 23.

When the above-mentioned radio-communication terminal 20 is inserted in the PC card slot provided in the housing of the host device 1, the PC-card interface part 18 provides the host device 1 with the transmitter/receiver function for radio communications by the connection of the PC-card terminal part 17 with the connector of the host device 1.

In the state in which the radio-communication terminal 20 of this embodiment is inserted in the host device 1, the SIM card slot 16 and the housing sidewall 5 of the host device 1 are mutually opposed in close proximity. Therefore, when the host device 1 is equipped with the radio-communication terminal 20, the insertion and removal of the SIM card during operation of the terminal 20 can be prevented since the tray 12 cannot be inserted or removed because of the positional relation between the housing side wall 5 of the host device 1 and the SIM card slot 16.

The use of the tray 12 in the card model radio-communication terminal 20 of this embodiment allows improvement of the operability of the card loading part when inserting and removing the SIM card 10 to and from the radio-communication terminal 20.

Next, FIG. 8 is a cross-sectional view of the card model radio-communication terminal in another embodiment of the invention, which is taken along the line A-A indicated in FIG. 3 similar to FIG. 6. FIG. 9 is a cross-sectional view of the card support member of the card model radio-communication terminal, which is taken along the line C-C indicated in FIG. 8.

As shown in FIG. 8 and FIG. 9, in the card model radio-communication terminal 20 of this embodiment, the card loading part comprises the SIM card slot 36 which is capable of inserting the SIM card 10, the SIM card support member 34, and the SIM card socket 22.

The SIM card slot 36 is formed in the side wall (namely, the side wall 15 of the extension housing part 14) of the terminal housing 21, and it has the positional relation such that the SIM card slot 36 and the housing side wall of the host device are mutually opposed in proximity when the radio-communication terminal 20 is inserted in the host device.

The printed circuit board 23 is connected with the PC-card interface part 18, and the SIM card socket 22 is arranged on this printed circuit board 23.

The SIM card support member 34 is arranged above the printed circuit board 23, and this SIM card support member 34 supports the SIM card 10 so as to be slidable in the direction that is parallel to the insertion direction of the radio-communication terminal 20 to the host device.

When the SIM card 10 is inserted from the SIM card slot 36 in the card model radio-communication terminal device of FIG. 8, the SIM card 10 is accommodated in the SIM card support member 34. Hence, by inserting the SIM card 10 in the radio-communication terminal 20, the terminals on the bottom of the SIM card 10 are electrically connected with the terminals of the SIM card socket 22 on the printed circuit board 23.

When the above-mentioned card model radio-communication terminal 20 is inserted in the PC card slot provided in the housing of the host device 1, the PC-card interface part 18 provides the host device 1 with the transmitter/receiver function for radio communications by the connection of the PC-card terminal part 17 with the connector of the host device 1.

Similarly, in the state in which the card model radio-communication terminal 20 of this embodiment is inserted in the host device 1, the SIM card slot 36 and the housing sidewall 5 of the host device 1 are mutually opposed in close proximity. Therefore, when the host device 1 is equipped with the radio-communication terminal 20, the insertion and removal of the SIM card 10 during operation of the terminal 20 can be prevented since the SIM card 10 cannot be inserted or removed because of the positional relation between the housing side wall 5 of the host device 1 and the SIM card slot 36.

Unlike the case of FIG. 6, the card loading part of the card model radio-communication terminal 20 of this embodiment does not use the tray 12, and the SIM card 10 is accommodated directly in the SIM card support member 34. Therefore, the card model radio-communication terminal 20 of this embodiment is appropriate for a case in which slim structure of the radio-communication terminal 20 is needed.

As described in the foregoing, according to the card model radio-communication terminal device of the present invention, the card loading part is arranged in the extension housing part which is not accommodated in the host device when the radio-communication terminal device is inserted in the host device, so that the direction of removal of the SIM card accords with the direction of insertion of the radio-communication terminal device to the host device. When the host device is equipped with the radio-communication terminal device, the insertion and removal of the SIM card during operation of the terminal device cannot be performed because of the positional relation between the housing of the host device and the SIM card slot. Therefore, it is possible to prevent the card insertion and removal at the time of terminal operation easily with the reduced number of the necessary parts.

The present invention is not limited to the above-described embodiments, and variations and modifications may be made without departing from the present invention.

## Claims

1. A card model radio-communication terminal device, comprising:
a card interface part (18) which is accommodated in a host device (1) to provide a function as a transmitter/receiver terminal for radio communications;
an extension housing part (14) which is separated from the card interface part and not accommodated in the host device; and
a card loading part which is arranged in the extension housing part to load a card (10) that is capable of being inserted to and removed from the extension housing part, into the card loading part;
**characterized in that** the card loading part is arranged so that a direction of removal of the card accords with a direction of insertion of the card interface part to the host device, and a card slot of the extension housing part and a housing side wall of the host device are mutually opposed in proximity when the card interface part is inserted in the host device.

2. The card model radio-communication terminal device of claim 1 **characterized in that** the card (10) is a SIM card, and the card loading part comprises a SIM card slot (16) formed in the extension housing part, and a SIM card socket (22) having terminals electrically connected with terminals of the SIM card when the SIM card is loaded in the card loading part.

3. The card model radio-communication terminal device of claim 1 **characterized in that** the card interface part (18) comprises an external configuration which is in conformity with PCMCIA PC card standard.

4. The card model radio-communication terminal device of claim 1 **characterized in that** the card loading part comprises:
a tray (42) capable of carrying a SIM card;
a tray support member (24) supporting the tray to be slidable in a direction parallel to the direction of insertion of the card interface part to the host device;
a SIM card slot (16) formed in the extension housing part; and
a SIM card socket (22) having terminals electrically connected with terminals of the SIM card when the SIM card is loaded in the card loading part.

5. The card model radio-communication terminal device of claim 1 **characterized in that** the card loading part comprises:
a SIM card support member (34) supporting a SIM card to be slidable in a direction parallel to the direction of insertion of the card interface part to the host device;
a SIM card slot (16) formed in the extension housing part; and
a SIM card socket (22) having terminals electrically connected with terminals of the SIM card when the SIM card is loaded in the card loading part.

6. The card model radio-communication terminal device of claim 2 **characterized by** further comprising a printed circuit board (23) connected to the card interface part, wherein the SIM card socket of the card loading part is arranged on the printed circuit board.

7. The card model radio-communication terminal device of claim 4 **characterized by** further comprising a printed circuit board (23) connected to the card interface part, wherein the SIM card socket of the card loading part is arranged on the printed circuit board.

8. The card model radio-communication terminal device of claim 5 **characterized by** further comprising a printed circuit board (23) connected to the card interface part, wherein the SIM card socket of the card loading part is arranged on the printed circuit board.

9. The card model radio-communication terminal device of claim 1 **characterized in that** the card (10) is either a SIM card or a CF card.

10. The card model radio-communication terminal device of claim 1 **characterized in that** the host device (1) is any of a personal computer, a digital camera, a digital voice recorder, a PDA, and a portable telephone.
